# EUROPEAN PATENT SPECIFICATION

(11) **EP 2 902 175 B1**
(45) Date of publication and mention of the grant of the patent: **23.11.2016**
(21) Application number: 15153794.1
(22) Date of filing: 04.02.2015
(51) Int. Cl.: B29C 67/00

(54) **Device and method for forming a workpiece by means of 3-D extrusion**
Vorrichtung und Verfahren zum Umformen eines Werkstücks mittels 3D-Extrusion
Dispositif et procédé de formation d'une pièce au moyen d'extrusion en 3-D

(30) Priority: 04.02.2014 NL 2012198
(43) Date of publication of application: 05.08.2015
(73) Proprietor: Leapfrog B.V., 2408 AW Alphen aan de Rijn (NL)
(72) Inventor: Otten, Martinus, Petrus, 1052 KM Amsterdam (NL)
(74) Representative: Patentwerk B.V.

(56) References cited:
- EP-A1- 2 617 554
- US-A1- 2013 242 317

## Description

The use of 3-D extrusion for manufacturing workpieces has greatly increased in recent years. This relates not only to the manufacture of prototypes and models but also, as a result of the falling prices of this technique, the production of small series.

The invention therefore relates to a device for forming a workpiece by means of 3-D extrusion, wherein the device is provided with a frame, at least three spindles extending in vertical direction at three different positions in the frame and drivable by means of spindle motors, a substantially horizontally extending work platform for supporting the workpiece, wherein the work platform is connected to each of the spindles and wherein at the position where the work platform is connected to one of the spindles the vertical position of the work platform is adjustable by the associated spindle, a displacing member connected to the frame and configured to displace a carrier in a substantially horizontal plane of movement, at least one extrusion head mounted on the carrier, feed means for feeding material for extrusion to the at least one extrusion head and a control member for controlling the spindle motors, the displacing member, the extrusion head and the feed means.

Such devices are generally known. The application of 3-D printing requires a mobility of the extrusion head in three directions relative to the work platform, also referred to as a bed. In the above elucidated device the work platform is configured to move in the vertical direction and the extrusion head is configured to move in both horizontal directions.

EP2617554 discloses the features of the respective preambles of claims 1 and 10.

It is of great importance for the manufacture of a workpiece with a high precision that the plane in which the extrusion head can move is as parallel as possible to the plane of the work platform. The digital model which moves the extrusion head does after all have layers which are built up during successive movements of the extrusion head formed in a plane. When the base surface is not precisely parallel to the plane in which the extrusion head moves, there is the chance of the extrusion head catching against the platform or against already formed layers or of the extruded material not making contact with a base surface. This is solved in the prior art by forming the lowermost layers of a workpiece from a removable, for instance water-soluble material as is also used in this technique to fill recesses. The application of such a material requires the use of a device with at least two extrusion heads and associated auxiliary equipment, while it is not possible to preclude the initially arranged layers of removable material forming a base layer which extends wholly parallel to the plane in which the extrusion head moves.

The present invention has for its object to provide a device of the above stated type which, also with use of a single extrusion head, avoids the above stated drawbacks.

This object is achieved with a device of the above stated type, wherein the device is provided with a measuring device for measuring the vertical position of the work platform at measuring positions located in the vicinity of the spindles, and the control member is configured to move the work platform into the vicinity of the carrier, to measure the vertical position of the work platform in each of the measuring positions and to correct the vertical position of the work platform by means of the spindle motors so that the work platform extends parallel to the plane of movement of the carrier.

As a result of these measures the work platform is brought into a position wherein it extends parallel to the plane of movement of the extrusion head so that the layers of extruded material are built up in parallel layers.

There are various possibilities for implementing the invention. A first embodiment thus provides the option of mounting the measuring device on the frame in the form of at least three measuring members, each arranged in the vicinity of a spindle. This embodiment is based on the assumption that the frame forms the reference and that the plane in which the displacing member moves extends parallel to a reference plane of the frame. This embodiment makes use of measuring members which are mounted on the frame and the position of which is known relative to the reference plane of the frame and which measures, and where necessary corrects, the position of the work platform.

The above embodiment makes use of the assumption that the plane of movement of the extrusion heads extends parallel to the reference plane of the frame. This is not necessarily always the case. For situations in which this is indeed not the case, a further embodiment provides the measure that the measuring members are configured to measure the vertical position of the carrier in each of the measuring positions, and that the control member is configured to move the carrier to the successive measuring positions. When determining the plane of movement of the extrusion heads and when determining the plane of the work platform reference is thus made to the reference plane of the frame so that a possible misalignment of the plane of movement of the extrusion heads is compensated.

It is however also possible to operate without reference of the frame. Another embodiment provides for this purpose the measure that the carrier is provided with a measuring member for determining the height of the work platform relative to the carrier, and that the control member is configured to move the work platform into the vicinity of the carrier, to move the carrier to the successive measuring positions, to measure the vertical position of the work platform in each of the measuring positions by means of the measuring member and to correct the vertical position of the work platform by means of the spindle motors so that the work platform extends parallel to the plane of the movement of the carrier. In this embodiment a measurement is thus carried out between the components of the device which in fact determine the accuracy.

According to a first structurally attractive embodiment, the measuring member is provided with a pin movable in vertical direction in a guide and with a detector which generates a signal when the pen reaches a predetermined position during the upward movement thereof relative to the guide. This is a simple, reliable and accurate manner of measuring the associated distance.

It is not however precluded according to an alternative embodiment that the measuring member comprises a distance meter operating by means of laser. Laser-based measuring members are becoming available at increasingly lower prices in recent times, so that this form of distance meter forms a good alternative.

In order to increase the accuracy of the measurement procedure, it is recommended that the control member is configured to correct the vertical position of the work platform prior to the manufacture of a product. The calibration is hereby carried out shortly before the moment at which accuracy is of the greatest importance.

According to a structurally attractive embodiment, the displacing member comprises a first and a second primary guide rail, both extending substantially horizontally on either side of the space defined by the spindles, a carriage which extends between the primary guide rails and is movable along the primary guide rails and which is provided with a secondary guide rail which extends transversely of the primary guide rails and along which the carrier is movable, and drive means for moving the carriage along the primary guide rails and moving the carrier along the secondary rails. This construction makes it possible to arrange the measuring member on the underside of the carrier.

Yet another structurally attractive embodiment provides the measure that the drive means comprise a primary motor which is placed in the frame and coupled to a primary toothed wheel which is connected by means of a primary toothed belt to the carriage, and comprise a secondary motor placed in the frame and coupled to a secondary toothed wheel which is connected by means of a secondary toothed belt to the carrier. This method of driving the carrier results in a low mass inertia since the motors are both mounted fixedly in the frame and these relatively heavy parts do not need to be moved.

The invention finally provides a method for placing parallel to the plane of movement of an extrusion head of a 3-D extrusion machine a work platform which is movable in vertical direction by means of spindles and on which the workpiece to be manufactured by the extrusion machine is formed, comprising the steps of moving the work platform into the vicinity of a carrier on which the extrusion head is placed, moving the carrier to successive measuring positions in the vicinity of the spindles, measuring the vertical position of the work platform in each of the measuring positions and correcting the vertical position of the work platform by means of the spindles. Application of this method results in the same advantages as the use of the above elucidated devices.

The present invention is elucidated hereinbelow with reference to the accompanying drawings, in which:
Figure 1 is a schematic front view of a device according to the invention;
Figure 2 is a schematic perspective view of the device shown in figure 1; and
Figure 3 is a schematic cross-sectional view of an alternative embodiment.

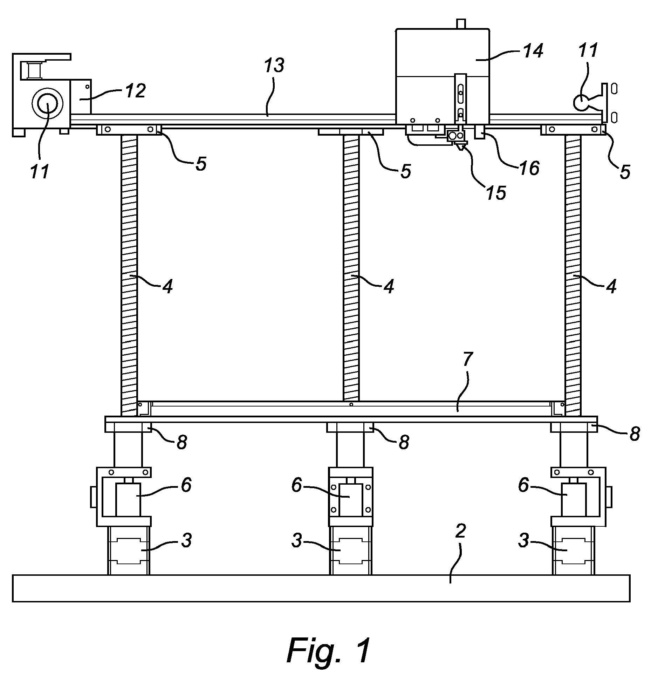

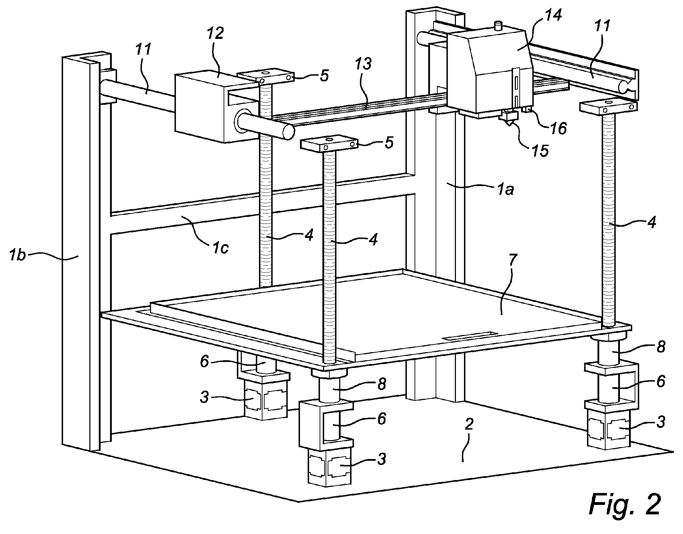

The device shown in figures 1 and 2 comprises a frame 1 which is shown in figure 2 in the form of two vertical angle profiles 1a and 1b and a rod 1c connecting the two profiles. It will be apparent that the frame will be provided in most cases with corresponding angle profiles on the front side of the device. It is however likewise possible for the frame to take the form of a casing in which the components are placed. Frame 1 also comprises a base plate 2 on which, in the present case at each of two corner points and in the middle of the opposite side, is placed a foot 3 in which is mounted a vertically extending spindle 4. On their upper side the spindles 4 are each mounted in an upper bearing 5 connected to frame 1. Arranged in each of the feet 3 is an electric motor 6 which functions as spindle motor and can drive the associated spindle 4 in rotation. A gear transmission can be arranged in the housing of spindle motor 6. Arranged above base plate 2 is a work platform 7 which extends as horizontally as possible. Work platform 7 is connected to three nuts 8 through which spindles 4 extend and to which they are connected. When one of the motors 6 is thus running, the spindle 4 connected thereto will rotate whereby the nut 8 placed thereon moves in vertical direction and work platform 7 is adjusted in height at the position of nut 8 which will tilt work platform 7. With synchronous use of the three spindle motors 6 the work platform 7 will be moved as a whole in vertical direction.

For the purpose of arranging the extruded material use is made of a displacing member which is designated as a whole with 10 and which is provided with two primary guide rails 11 extending horizontally and mutually parallel in the vicinity of the upper end of frame 1. Arranged between these guide rails 11 is a carriage 12 which is movable along primary guide rails 11 in the longitudinal direction of primary guide rails 11. Arranged in the longitudinal direction of carriage 12 is a secondary guide rail 13 along which a carrier 14 is movable. Carrier 14 is provided on its underside with an extrusion head 15. Owing to the combined movement of carriage 12 along primary guide rails 11 and of carrier 14 along secondary guide rail 15 the extrusion head 15 can be moved over the whole surface of work platform 7. For driving of carriage 12 along primary guide rails 11 use is made of an electric motor (not shown in the drawings) which is connected fixedly to the frame and connected to carriage 12 by means of a toothed wheel (not shown) and toothed belt (not shown). For driving of carrier 14 along secondary guide rail 13 use is made of an electric motor (not shown in the drawing) which is connected to carrier 14 by means of a toothed wheel and a toothed belt. This toothed belt is guided in two directions along the carriage in order to separate the movement of carrier 14 from that of carriage 12. The device is of course provided with a control device in the form of a digital computer for the purpose of controlling diverse electric motors and the extrusion head so that the desired product is formed. It will be apparent to the skilled person that means are also provided for feeding the material for extrusion to the extrusion head, as known per se from the prior art. The device described up to this point corresponds to a prior art device.

In order to achieve the effect of the invention the carrier 14 in the embodiment shown in figures 1 and 2 is provided on its underside with a probe 16 functioning as measuring member. This probe 16 is connected to the digital computer which is configured to perform the following procedure.

Prior to the production of a new product, or at any other desired moment, work platform 7 is carried to a position in the vicinity of carrier 14. In many cases this will be the uppermost position of work platform 7. Carrier 14 is then moved to a position in the vicinity of one of the spindles 4 and the distance between carrier 14 and the work platform is measured at this position by means of the probe 16 mounted on the underside of carrier 14. This measurement is repeated in the vicinity of the other spindles 4. Information is hereby obtained relating to the possible misalignment of work platform 7 relative to the plane in which carrier 14, and thereby extrusion head 15, moves. Finally, the control member controls spindle motors 6 such that work platform 7 extends parallel to the plane of movement of carrier 14. The product can then be manufactured, wherein work platform 7 continues to extend parallel to the plane of movement of carrier 14 through appropriate control of spindle motors 6.

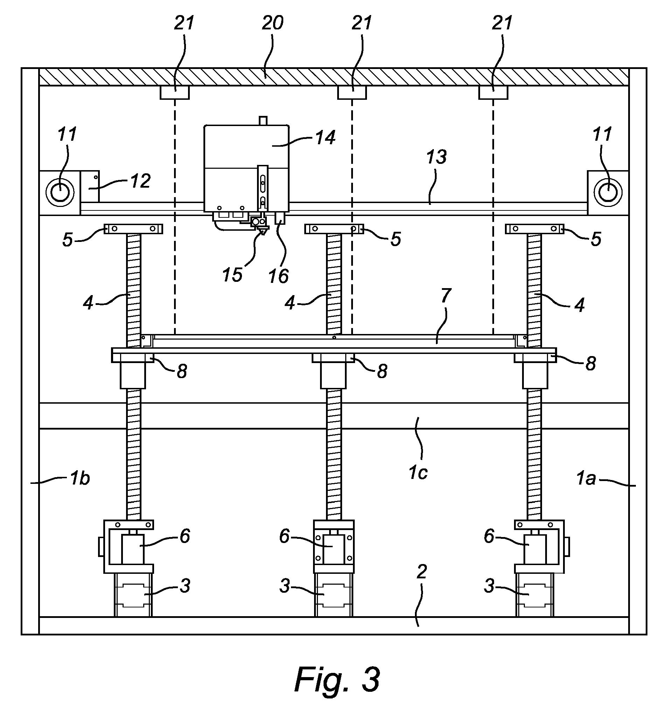

Figure 3 shows an embodiment wherein the frame is provided with an upper plate 20, on the underside of which three distance measuring members 21 are provided, only two of which are shown in the drawing. These distance measuring members 21 are configured to measure the distance between the associated measuring member 21 and work platform 7 under the control of the digital computer. It is then also possible for the digital computer to align work platform 7 parallel to upper plate 20 by means of controlling the spindle motors 6. This embodiment is based on the assumption that the plane of movement of carrier 14 extends parallel to upper plate 20, which will indeed generally be the case. It is however also possible to measure the position of carrier 14 in the three associated positions in the vicinity of spindles 4 by means of measuring 7 members 21, wherein a possible misalignment of upper plate 20 relative to the plane of movement of carrier 14 is compensated.

It will be apparent that diverse variations can be applied in the above stated embodiments within the scope of the invention as defined by the appended claims.

Measures of different embodiments can in particular be combined with each other. It is also pointed out that the embodiments have three spindles, but that the invention is likewise applicable with two, four or more spindles.

## Claims

1. Device for forming a workpiece by means of 3-D extrusion, wherein the device comprises:
- a frame;
- at least three spindles extending in vertical direction at three different positions in the frame;
- a substantially horizontally extending work platform for supporting the workpiece, wherein the work platform is connected to each of the spindles and wherein at the position where the work platform is connected to one of the spindles the vertical position of the work platform is adjustable by the associated spindle;
- a displacing member connected to the frame and configured to displace a carrier in a substantially horizontal plane of movement;
- at least one extrusion head mounted on the carrier;
- feed means for feeding material for extrusion to the at least one extrusion head; and
- a control member for controlling the spindle motors, the displacing member, the extrusion head and the feed means,
**characterized in that**
- the spindles are driven by spindle motors;
- the device is provided with a measuring device for measuring the vertical position of the work platform at measuring positions located in the vicinity of the spindles;
- the control member is configured to move the work platform into the vicinity of the carrier, to measure the vertical position of the work platform in each of the measuring positions and to correct the vertical position of the work platform by means of the spindle motors so that the work platform extends parallel to the plane of movement of the carrier.

2. Device as claimed in claim 1, **characterized in that** the measuring device is mounted on the frame and is provided with at least three measuring members, each arranged in the vicinity of a spindle.

3. Device as claimed in claim 2, **characterized in that** the measuring members are configured to measure the vertical position of the carrier in each of the measuring positions, and that the control member is configured to move the carrier to the successive measuring positions.

4. Device as claimed in claim 1, **characterized in that**
- the carrier is provided with a measuring member for determining the height of the work platform relative to the carrier;
- the control member is configured to move the work platform into the vicinity of the carrier, to move the carrier to the successive measuring positions, to measure the vertical position of the work platform in each of the measuring positions by means of the measuring member and to correct the vertical position of the work platform by means of the spindle motors so that the work platform extends parallel to the plane of the movement of the carrier.

5. Device as claimed in claim 4, **characterized in that** the measuring member is provided with a pin movable in vertical direction in a guide and with a detector which generates a signal when the pen reaches a predetermined position during the upward movement thereof relative to the guide.

6. Device as claimed in claim 4, **characterized in that** the measuring member comprises a distance meter operating by means of laser.

7. Device as claimed in any of the foregoing claims, **characterized in that** the control member is configured to correct the vertical position of the work platform prior to the manufacture of a product.

8. Device as claimed in any of the foregoing claims, **characterized in that** the displacing member comprises:
- a first and a second primary guide rail, both extending substantially horizontally on either side of the space defined by the spindles;
- a carriage which extends between the primary guide rails and is movable along the primary guide rails and which is provided with a secondary guide rail which extends transversely of the primary guide rails and along which the carrier is movable; and
- drive means for moving the carriage along the primary guide rails and moving the carrier along the secondary rails.

9. Device as claimed in claim 8, **characterized in that** the drive means comprise a primary motor which is placed in the frame and coupled to a primary toothed wheel which is connected by means of a primary toothed belt to the carriage, and comprise a secondary motor placed in the frame and coupled to a secondary toothed wheel which is connected by means of a secondary toothed belt to the carrier.

10. Method for placing parallel to the plane of movement of an extrusion head of a 3-D extrusion machine a work platform which is movable in vertical direction by means of spindles and on which the workpiece to be manufactured by the extrusion machine is formed, comprising the following steps of:
- moving the work platform into the vicinity of a carrier on which the extrusion head is placed,
- moving the carrier to successive measuring positions in the vicinity of the spindles, measuring the vertical position of the work platform in each of the measuring positions and **characterized by** correcting the vertical position of the work platform by means of spindle motors which drive the spindles.

## Patentansprüche

1. Vorrichtung zum Umformen eines Werkstücks mittels 3-D-Extrusion, wobei die Vorrichtung Folgendes aufweist:
- einen Rahmen;
- mindestens drei Spindeln, welche sich in vertikaler Richtung an drei verschiedenen Positionen in dem Rahmen erstrecken;
- eine sich im Wesentlichen horizontal erstreckende Arbeitsplattform zum Tragen des Werkstücks, wobei die Arbeitsplattform mit jeder der Spindeln verbunden ist und wobei an der Position, wo die Arbeitsplattform mit einer der Spindeln verbunden ist, die vertikale Position der Arbeitsplattform durch die zugeordnete Spindel einstellbar ist;
- ein Verlagerungselement, welches mit dem Rahmen verbunden ist und dafür ausgelegt ist, einen Träger in einer im Wesentlichen horizontalen Bewegungsebene zu verlagern;
- mindestens einen Extrusionskopf, welcher auf dem Träger montiert ist;
- Fördermittel zum Fördern von Material zur Extrusion zu dem mindestens einen Extrusionskopf; und
- ein Steuerelement zum Steuern der Spindelmotoren, des Verlagerungselements, des Extrusionskopfs und der Fördermittel,
**dadurch gekennzeichnet, dass**
- die Spindeln von Motoren angetrieben werden;
- die Vorrichtung mit einer Messvorrichtung zum Messen der vertikalen Position der Arbeitsplattform an Messpositionen versehen ist, welche in der Nähe der Spindeln angeordnet ist;
- das Steuerelement dafür ausgelegt ist, die Arbeitsplattform in die Nähe des Trägers zu bewegen, die vertikale Position der Arbeitsplattform an jeder der Messpositionen zu messen und die vertikale Position der Arbeitsplattform mit Hilfe der Spindelmotoren zu korrigieren, so dass sich die Arbeitsplattform parallel zur Bewegungsebene des Trägers erstreckt.

2. Vorrichtung nach Anspruch 1, **dadurch gekennzeichnet, dass** die Messvorrichtung an dem Rahmen montiert ist und mit mindestens drei Messelementen versehen ist, welche jeweils in der Nähe einer Spindel angeordnet sind.

3. Vorrichtung nach Anspruch 2, **dadurch gekennzeichnet, dass** die Messelemente dafür ausgelegt sind, um die vertikale Position des Trägers an den Messpositionen jeweils zu messen, und dass das Steuerelement dafür ausgelegt ist, den Träger zu den nachfolgenden Messpositionen zu bewegen.

4. Vorrichtung nach Anspruch 1, **dadurch gekennzeichnet, dass**
- der Träger mit einem Messelement zum Bestimmen der Höhe der Arbeitsplattform in Bezug auf den Träger versehen ist;
- das Steuerelement dafür ausgelegt ist, die Arbeitsplattform in die Nähe des Trägers zu bewegen, den Träger zu den nachfolgenden Messpositionen zu bewegen, die vertikale Position der Arbeitsplattform an jeder der Messpositionen mit Hilfe des Messelements zu messen und die vertikale Position der Arbeitsplattform mit Hilfe der Spindelmotoren zu korrigieren, so dass sich die Arbeitsplattform parallel zur Bewegungsebene des Trägers erstreckt.

5. Vorrichtung nach Anspruch 4, **dadurch gekennzeichnet, dass** das Messelement mit einem in einer Führung in vertikaler Richtung beweglichen Stift und einem Detektor versehen ist, welcher ein Signal erzeugt, wenn der Stift eine vorgegebene Position während dessen Aufwärtsbewegung in Bezug auf die Führung erreicht.

6. Vorrichtung nach Anspruch 4, **dadurch gekennzeichnet, dass** das Messelement einen Abstandsmesser aufweist, welcher mit Hilfe eines Lasers arbeitet.

7. Vorrichtung nach einem der vorhergehenden Ansprüche, **dadurch gekennzeichnet, dass** das Steuerelement dafür ausgelegt ist, die vertikale Position der Arbeitsplattform vor der Herstellung eines Produktes zu korrigieren.

8. Vorrichtung nach einem der vorhergehenden Ansprüche, **dadurch gekennzeichnet, dass** das Verlagerungsmittel Folgendes aufweist:
- eine erste und eine zweite primäre Führungsschiene, welche sich beide im Wesentlichen horizontal auf jeder Seite des von den Spindeln definierten Raums erstrecken;
- einen Schlitten, welcher sich zwischen den primären Führungsschienen erstreckt und entlang der primären Führungsschienen beweglich ist und welcher mit einer sekundären Führungsschiene versehen ist, welche sich sich quer zu den primären Führungsschienen erstreckt und entlang welcher der Schlitten beweglich ist; und
- Antriebsmittel zum Bewegen des Schlittens entlang der primären Führungsschienen und Bewegen des Trägers entlang der sekundären Schienen.

9. Vorrichtung nach Anspruch 8, **dadurch gekennzeichnet, dass** die Antriebsmittel einen primären Motor aufweisen, welcher an dem Rahmen angeordnet und an ein primäres Zahnrad gekoppelt ist, welches mit Hilfe eines primären Zahnriemens mit dem Schlitten verbunden ist, und einen sekundären Motor aufweisen, welcher an dem Rahmen angeordnet und an ein sekundäres Zahnrad gekoppelt ist, welches mit Hilfe eines sekundären Zahnriemens mit dem Träger verbunden ist.

10. Verfahren zum Anordnen einer Arbeitsplattform, welche mit Hilfe von Spindeln in vertikaler Richtung beweglich ist und auf welcher das durch die Extrusionsmaschine herzustellende Werkstück umgeformt wird, parallel zu der Bewegungsebene eines Extrusionskopfs einer 3-D-Extrusionsmaschine, aufweisend die folgenden Schritte:
- Bewegen der Arbeitsplattform in die Nähe eines Trägers, auf welchem der Extrusionkopf angeordnet ist,
- Bewegen des Trägers zu nachfolgenden Messpositionen in der Nähe der Spindeln, Messen der vertikalen Position der Arbeitsplattform an jeder der Messpositionen und **gekennzeichnet, durch** Korrigieren der vertikalen Position der Arbeitsplattform mit Hilfe von Spindelmotoren, welche die Spindeln antreiben.

## Revendications

1. Dispositif de formation d'une pièce de fabrication par extrusion 3D, le dispositif comprenant :
- un bâti ;
- au moins trois broches s'étendant en direction verticale à trois positions différentes dans le bâti ;
- une plateforme de travail s'étendant pratiquement horizontalement pour supporter la pièce de fabrication, la plateforme de travail étant connectée à chacune des broches, et la position de la plateforme de travail étant réglable au niveau de la position où la plateforme de travail est connectée à une des broches par la broche associée ;
- un élément de déplacement connecté au bâti et conçu pour déplacer un support dans un plan de déplacement pratiquement horizontal ;
- au moins une tête d'extrusion montée sur le support ;
- un moyen d'apport permettant d'apporter un matériau en vue de son extrusion sur l'au moins une tête d'extrusion ; et
- un élément de contrôle permettant de contrôler les moteurs de broche, l'élément de déplacement, la tête d'extrusion et le moyen d'apport,
**caractérisé en ce que :**
- les broches sont entraînées par les moteurs de broche ;
- le dispositif est muni d'un dispositif de mesure permettant de mesurer la position verticale de la plateforme de travail dans des positions de mesure situées à proximité des broches ;
- l'élément de contrôle est conçu pour déplacer la plateforme de travail à proximité du support, mesurer la position verticale de la plateforme de travail dans chacune des positions de mesure, et corriger la position verticale de la plateforme de travail au moyen des moteurs de broche de sorte que la plateforme de travail s'étende parallèlement au plan de déplacement du support.

2. Dispositif selon la revendication 1, **caractérisé en ce que** le dispositif de mesure est monté sur le bâti et est muni d'au moins trois éléments de mesure, disposés chacun à proximité d'une broche.

3. Dispositif selon la revendication 2, **caractérisé en ce que** les éléments de mesure sont conçus pour mesurer la position verticale du support dans chacune des positions de mesure, et **en ce que** l'élément de contrôle est conçu pour déplacer le support dans les positions de mesure successives.

4. Dispositif selon la revendication 1, **caractérisé en ce que :**
- le support est muni d'un élément de mesure permettant de déterminer la hauteur de la plateforme par rapport au support ;
- l'élément de contrôle est conçu pour déplacer la plateforme de travail à proximité du support, déplacer le support dans les positions de mesure successives, mesurer la position verticale de la plateforme de travail dans chacune des positions de mesure au moyen de l'élément de mesure, et corriger la position verticale de la plateforme de travail au moyen des moteurs de broche de sorte que la plateforme de travail s'étende parallèlement au plan de déplacement du support.

5. Dispositif selon la revendication 4, **caractérisé en ce que** l'élément de mesure est muni d'une goupille mobile en direction verticale dans un guide, et d'un détecteur qui génère un signal quand la goupille atteint une position prédéterminée pendant le déplacement vers le haut de la goupille par rapport au guide.

6. Dispositif selon la revendication 4, **caractérisé en ce que** l'élément de mesure comprend un mesureur de distance fonctionnant au moyen d'un laser.

7. Dispositif selon l'une quelconque des revendications précédentes, **caractérisé en ce que** l'élément de contrôle est conçu pour corriger la position verticale de la plateforme de travail avant la fabrication d'un produit.

8. Dispositif selon l'une quelconque des revendications précédentes, **caractérisé en ce que** l'élément de déplacement comprend :
- un premier et un second rail de guidage principal, s'étendant l'un et l'autre pratiquement horizontalement de chaque côté de l'espace défini par les broches ;
- un chariot s'étendant entre les rails de guidage principaux et mobile le long des rails de guidage principaux, et muni d'un rail de guidage secondaire s'étendant transversalement par rapport aux rails de guidage principaux et le long duquel le support est mobile ; et
- un moyen d'entraînement permettant de déplacer le chariot le long des rails de guidage principaux et de déplacer le support le long des rails secondaires.

9. Dispositif selon la revendication 8, **caractérisé en ce que** le moyen d'entraînement comprend un moteur principal placé dans le bâti et couplé à une roue dentée principale connectée au chariot au moyen d'une courroie dentée principale, et comprend un moteur secondaire placé dans le bâti et couplé à une roue dentée secondaire connectée au support au moyen d'une courroie dentée secondaire.

10. Procédé de positionnement, parallèlement au plan de déplacement d'une tête d'extrusion d'une machine d'extrusion 3D, d'une plateforme de travail mobile en direction verticale au moyen de broches, et sur laquelle est formée la pièce de fabrication à fabriquer par la machine d'extrusion, comprenant les étapes consistant à :
- déplacer la plateforme de travail à proximité d'un support sur lequel est placée la tête d'extrusion ;
- déplacer le support dans des positions de mesure successives à proximité des broches, mesurer la position verticale de la plateforme de travail dans chacune des positions de mesure, le procédé étant **caractérisé par** l'étape consistant à :
corriger la position verticale de la plateforme de travail au moyen de moteurs de broche qui entraînent les broches.
